Europäisches Patentamt

European Patent Office

Office européen des brevets

(19)

(11) Numéro de publication : **0 320 403 B1**

(12)

# FASCICULE DE BREVET EUROPEEN

(45) Date de publication du fascicule du brevet :
**14.08.91 Bulletin 91/33**

(51) Int. Cl.⁵ : **B01J 8/44**, // F23C11/02,
F22B31/00

(21) Numéro de dépôt : **88403137.8**

(22) Date de dépôt : **09.12.88**

(54) **Grille de fluidisation refroidie.**

(30) Priorité : **11.12.87 FR 8717314**

(43) Date de publication de la demande :
**14.06.89 Bulletin 89/24**

(45) Mention de la délivrance du brevet :
**14.08.91 Bulletin 91/33**

(84) Etats contractants désignés :
**AT BE CH DE ES FR GB GR IT LI LU NL SE**

(56) Documents cités :
**EP-A- 0 019 652
AT-B- 378 591
FR-A- 2 582 540
GB-A- 2 182 578
US-A- 3 016 624**

(73) Titulaire : **CHARBONNAGES DE FRANCE,
Etablissement public dit:
Tour Albert 1er 65 avenue de Colmar
F-92507 Rueil Malmaison Cédex (FR)**

(72) Inventeur : **Kita, Jean-Claude
12 rue Voltaire
F-62980 Vermelles (FR)**
Inventeur : **Puff, Roger Marcel
12 bis rue du Pôle Nord
F-62300 Lens (FR)**
Inventeur : **Petrovic, Alexandre
5 avenue Roger
F-78400 Chatou (FR)**
Inventeur : **Chretien, Marcel
1 avenue des Bouleaux
F-91300 Morsang-sur-Orge (FR)**

(74) Mandataire : **Robert, Jean-Pierre et al
CABINET BOETTCHER 23, rue la Boétie
F-75008 Paris (FR)**

## Description

Les techniques de fluidisation d'une matière pulvérulente sont bien connues et trouvent une application intéressante dans le domaine des chaudières ou plus généralement des enceintes de réactions exothermiques. Dans cette application particulière il convient d'extraire le plus efficacement possible les calories libérées par la réaction ou la combustion. Cette extraction est le plus souvent opérée au moyen d'un échangeur de chaleur, généralement tubulaire, parcouru par de l'eau sous pression qui se vaporise, qui s'étend et/ou sur les parois du foyer et/ou au coeur même du lit fluidisé dans des zones privilégiées où les conditions de corrosion et d'érosion sont jugées moins importantes. Ces tubes sont donc situés au-dessus de la grille de fluidisation qui elle, de manière connue, comporte des ouvertures de soufflage de gaz de fluidisation (en général de l'air) qui divergent vers le haut, qui peuvent être complétées par des ouvertures d'arrivée d'un air additionnel. Ces dernières ouvertures sont placées au sommet de petites cheminées intercalées entre les ouvertures divergentes et l'air qui en sort est orienté plutôt horizontalement ou vers le bas au moyen d'un déflecteur ou grâce à une disposition particulière des orifices de distribution.

On connaît par ailleurs des grilles de fluidisation qui comportent des tubes de refroidissement, au contact du lit fluidisé. Cependant de telles grilles sont en général planes et ne possèdent pas les avantages des grilles à ouvertures de soufflage divergentes.

La présente invention entend proposer une amélioration importante à ce type de réacteur à lit fluidisé, avec une grille refroidie dans laquelle les ouvertures de soufflage sont divergentes permettant de maîtriser plus facilement la température au sein du lit que par des échangeurs de chaleur qui y sont placés et qui donc s'usent très rapidement, permettant également un réchauffage de l'air additionnel de fluidisation, et assurant un refroidissement de la grille qui a pour conséquences d'en augmenter la longévité.

A cet effet, l'invention a donc pour objet une grille de fluidisation d'une masse de matériau pulvérulent pour réacteur exothermique à lit fluidisé, comportant dans l'épaisseur d'une paroi des ouvertures adjacentes d'arrivée d'un gaz de sustentation du matériau situé du côté de sa face supérieure, ces ouvertures étant divergentes en direction de la masse à fluidiser, dans laquelle grille les parois divergentes de chaque ouverture comportent des tubulures de circulation d'un fluide de refroidissement.

Dans un premier mode de réalisation de l'invention, la grille est constituée par la superposition de nappes de paires de tubes parallèles, chaque nappe croisant une nappe adjacente et l'écartement des tubes de chaque paire dans la nappe étant croissant avec l'altitude de la nappe dans la grille.

L'angle de croisement peut être quelconque, mais, d'une valeur égale à 90°, il permettra de constituer des ouvertures pyramidales à base carrée ou rectangulaire. On peut dans le cadre de l'invention prévoir un angle de croisement de 120° ce qui permet de réaliser des ouvertures pyramidales à base hexagonale.

Pour rendre la grille étanche, en dehors des ouvertures d'amenée d'air de fluidisation, les parois de chaque cellule pyramidale ainsi constituée sont complétées entre les tubes parallèles de deux nappes différentes par des plaques de liaison soudés aux tubes entre leurs génératrices les plus voisines. En outre, dans le cas, notamment, d'une grille à cellules pyramidales à base carrée, les tubes adjacents de deux paires consécutives de la nappe supérieure peuvent être accolés ou reliés par une plaque de liaison ou peuvent être confondus tandis que les tubes correspondants de la nappe immédiatement inférieure sont réunis par des plaques de liaison horizontales.

Selon les variantes de réalisation de ce premier mode, les nappes de tubes peuvent être raccordées à des conduits périphériques qui constituent répartiteur ou collecteur de fluide, ou bien ces tubes peuvent être directement raccordés aux tubes d'échange de chaleur qui, classiquement tapissent la paroi de l'enceinte du réacteur ou de la chaudière.

Dans un second mode de réalisation, la grille est constituée par une juxtaposition de cellules évasées dont la paroi est constituée par au moins une tubulure enroulée hélicoïdalement à spires jointives. Chacune des cellules est réunie à l'une de ses voisines par des plaques soudées sensiblement dans le plan de leur plus grande section.

Dans ce mode de réalisation, on peut également prévoir sur la surface supérieure de la grille un réseau de collecteurs parallèles auquel est connectée chacune des extrémités aval des tubulures, ces collecteurs étant eux-mêmes reliés par leurs deux extrémités à des conduits communs d'où sont issus des tubes échangeurs de chaleur s'étendant verticalement le long des parois d'une enceinte de confinement du lit fluidisé, ou prévoir que chaque tubulure soit raccordée par son extrémité aval à un tube vertical d'échange de chaleur.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

— la figure 1 est une vue de dessus d'une grille de fluidisation conforme à l'invention,

— la figure 2 est une coupe selon la ligne II-II de la figure 1,

— la figure 3 est une coupe selon la ligne III-III de la figure 1,

— la figure 4 illustre par un schéma en coupe un second mode de réalisation d'une grille selon l'invention,

— la figure 5 est une vue schématique de dessus de la figure 4,

— la figure 6 montre en coupe une variante de la figure 4,

— la figure 7 est une vue schématique de dessus de cette variante,

— les figures 8 et 9 illustrent schématiquement deux chaudières équipées de grilles selon l'invention.

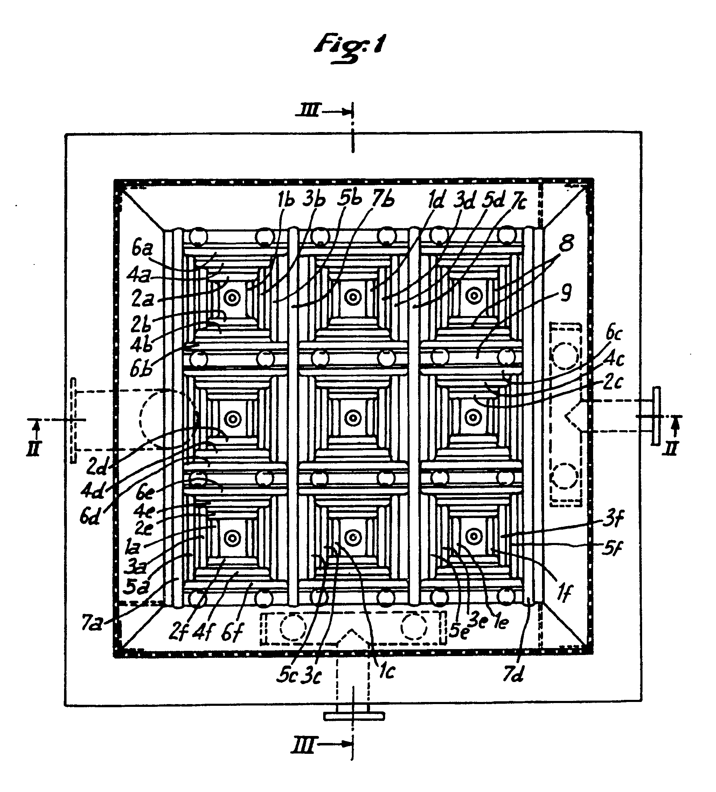

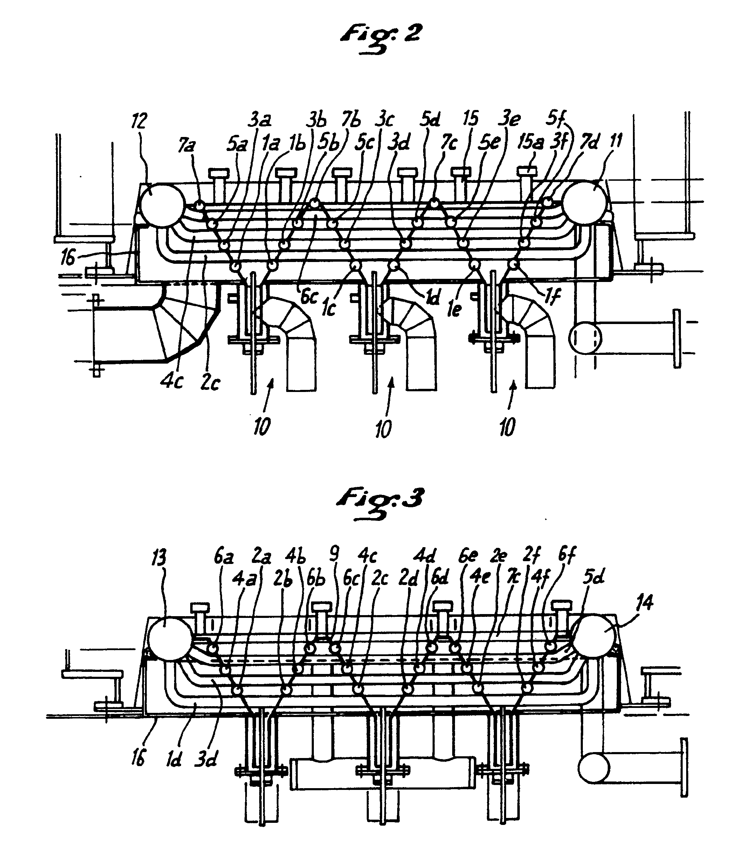

En se reportant tout d'abord aux figures 1 à 3, on voit une grille de fluidisation conforme à l'invention qui est constituée par une superposition de sept nappes de tubes parallèles, les nappes étant croisées successivement à 90°. Ainsi la nappe inférieure 1 comporte les paires de tubulures 1a, 1b, 1c, 1d, 1e, 1f ; les tubes de chaque paire sont écartés d'une valeur qui définit la plus petite dimension des ouvertures divergentes de la grille. La seconde nappe 2 comporte les paires de tubes 2a-2f, et est orientée à 90° par rapport à la première. L'écartement des tubes dans chaque paire est un peu plus important que dans la première nappe. Dans la troisième nappe 3, les paires de tubes 3a à 3f sont parallèles à celles de la nappe 1, et l'écartement des tubes dans chaque paire est encore agrandi. On constitue ainsi six premières nappes dans lesquelles les tubes de chaque paire sont de plus en plus écartés pour définir, comme le montrent les figures 1 à 3, des ouvertures pyramidales. Dans la septième couche, qui est la nappe supérieure, les tubes 7a à 7d sont espacés, comme si les tubes adjacents de chaque paire voisine étaient confondus en un seul tube.

La structure pyramidale de la grille est complétée, pour ce qui concerne les parois des ouvertures, par des portions de tôles 8 qui sont soudées aux tubes dans un plan diamétral de ces derniers entre leurs génératrices les plus proches. Alors que dans une direction, les ouvertures pyramidales sont bordées par les tubes 7a....7d, dans l'autre direction elles sont séparées par des bandes métalliques 9 soudées aux tubes adjacents de paires consécutives au travers desquelles de l'air (ou gaz) supplémentaire de fluidisation peut être admis au-dessus de la grille. L'arrivée de gaz ou d'air principal est réalisée, de manière connue, à la base des cellules pyramidales, au moyen de canalisations 10.

Chaque tube de chaque nappe a son extrémité raccordée à des tubes répartiteurs ou collecteurs placés à la périphérie de la grille. Dans le cas représenté, l'arrivée d'eau de refroidissement s'effectue par le répartiteur 11, l'eau circulant ensuite dans les nappes de références paires pour être recueillie par le collecteur intermédiaire 12, à partir duquel elle est dirigée vers le répartiteur 13 ; elle traverse ensuite les nappes de références impaires pour aboutir au collecteur 14.

L'eau, après avoir circulé dans la grille et été collectée, est transmise aux tubes d'échange de chaleur qui existent dans les chaudières à lit fluidisé, soit au sein même du lit, soit le long des murs de foyer où on peut raccorder directement les tubes de la grille de fluidisation aux tubes de foyer, sans sortir du cadre de l'invention.

L'air complémentaire de fluidisation, qui après avoir traversé les parois 9, est introduit au-dessus de la grille au moyen de buses 15 desquelles il est soufflé soit horizontalement, soit vers le bas au moyen d'un déflecteur 15a, peut être amené sous la grille, dans un caisson ou boîte à vent 16, dont la grille constitue la paroi supérieure.

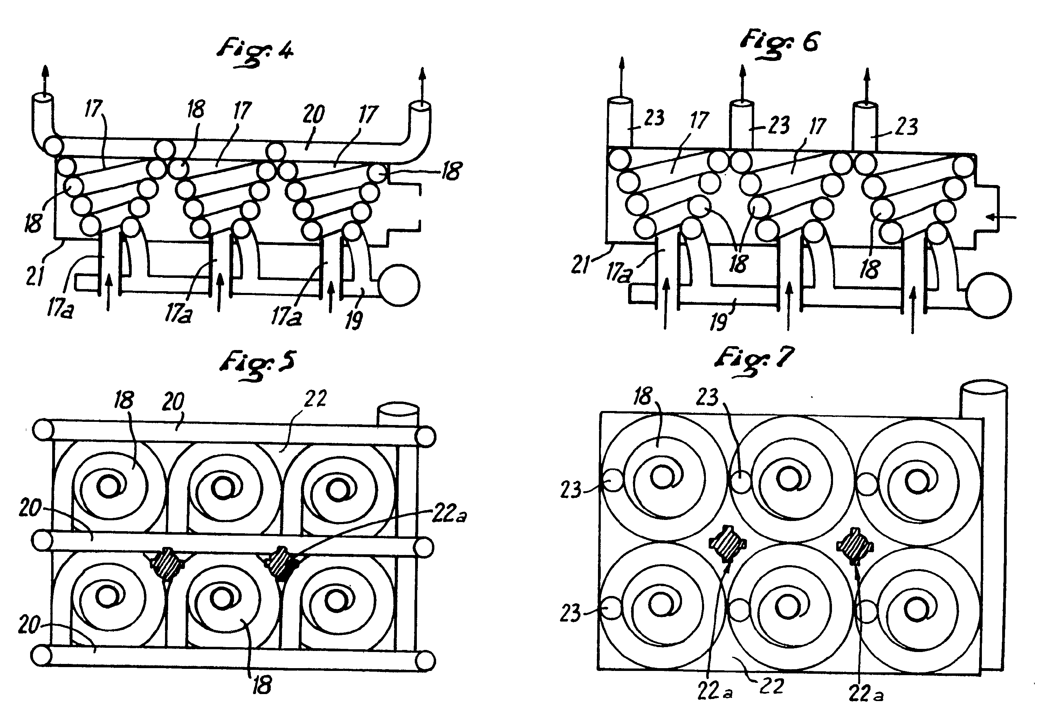

Sur les figures 4 et 5 on a représenté schématiquement un autre mode de réalisation d'une grille selon l'invention qui comporte toujours des ouvertures 17 divergentes d'admission principale d'air de fluidisation, conduit à leur base 17a. La paroi de chacune de ces ouvertures est constituée par une tubulure 18 enroulée hélicoïdalement (ici autour d'une surface conique) et raccordée à un répartiteur d'alimentation en eau 19, à sa base et à un collecteur 20 disposé à la surface supérieure de la grille. La surface gabarit sur laquelle est formé l'enroulement hélicoïdal peut être de toute forme conique ou pyramidale. Un cordon de soudure relie les spires jointives pour assurer l'étanchéité aux gaz de la paroi. De même que dans le cas précédent, les collecteurs 20 peuvent constituer directement les tubulures d'échange de chaleur de la chaudière elle-même, notamment le long de ses parois. On remarquera également que la grille forme la paroi supérieure d'un caisson 21 d'alimentation en air complémentaire de fluidisation qui débouche au-dessus de la grille par les ouvertures 22a ménagées dans la paroi 22 de liaison des cellules coniques au niveau de leur plus grand diamètre. Dans une variante non représentée, l'enroulement hélicoïdal peut être à spires non jointives. Dans ce cas, une plaque de liaison également hélicoïdale s'étend entre deux spires consécutives.

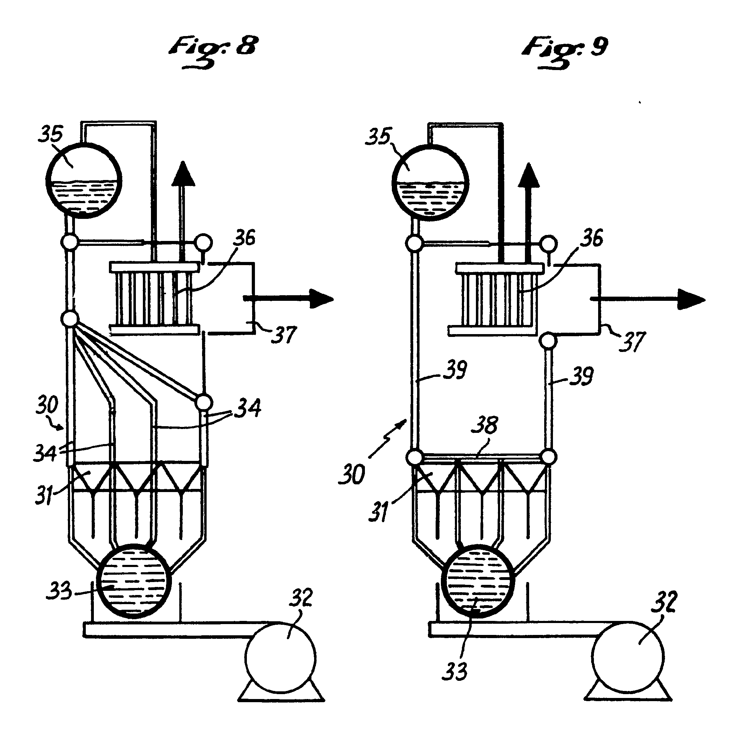

Aux figures 6 et 7, la variante de réalisation des figures précédentes montre que les tubulures 18 hélicoïdales sont directement et individuellement prolongées par des tubes verticaux 23 qui forment les tubes de la chaudière logés verticalement dans le foyer. Les autres dispositions restent identiques. Cette disposition est particulièrement avantageuse car elle permet la mise en place, au coeur de la combustion, quand il s'agit d'une chaudière, de tubes d'extraction de chaleur verticaux qui sont beaucoup moins soumis à l'abrasion et l'érosion du tube classique dans le lit.

La figure 8 montre schématiquement une chaudière 30 mettant en oeuvre une grille 31 conforme à l'invention. Cette chaudière comporte une centrale 32 de ventilation, une source d'eau 33 qui alimente les tubulures de la grille 31, pour ensuite circuler directement dans les tubes de chaudière 34 avant de rejoindre un collecteur eau-vapeur 35 et traverser un surchauffeur 36 situé dans le conduit de collecte des fumées et gaz chauds 37. Sur cette figure, les tubes de chaudière sont, comme en figures 6 et 7, directement reliés à la grille, à la verticale de chaque extrémité de tubulure 18.

Sur la figure 9 en revanche, on a représenté schématiquement une grille 31 qui comporte, comme dans le cas des figures 1 à 5, des collecteurs 20 d'eau chauffée dans la grille, desquels les tubes 39 partent, le long des parois de la chaudière, pour atteindre le collecteur 35 et le surchauffeur 36.

L'invention permet tout d'abord un refroidissement efficace de la grille, ce qui allonge sa durée de vie. Elle permet également d'extraire plus efficacement les calories dégagées lors de la combustion. Du fait que les parois des ouvertures divergentes sont, par leur face extérieure, au contact de l'air additionnel de fluidisation présent dans le caisson, il se produit un échauffement de cet air additionnel qui favorise la combustion. Enfin, la conduite et la régulation du fonctionnement de la chaudière sont grandement améliorées grâce au refroidissement de la grille.

L'invention trouve une application intéressante dans le domaine de la production d'énergie.

## Revendications

1. Grille de fluidisation d'une masse de matériau pulvérulent pour réacteur exothermique à lit fluidisé, comportant dans l'épaisseur d'une paroi des ouvertures adjacentes (17) d'arrivée d'un gaz de sustentation du matériau situé du côté de sa face supérieure, ces ouvertures étant divergentes en direction de la masse à fluidiser, caractérisée en ce que les parois divergentes de chaque ouverture comportent des tubulures (1-7, 18) de circulation d'un fluide de refroidissement.

2. Grille selon la revendication 1, caractérisée en ce qu'elle est constituée par la superposition de nappes (1-7) de paires de tubes parallèles, chaque nappe croisant une nappe adjacente et l'écartement des tubes de chaque paire dans la nappe étant croissant avec l'altitude de la nappe dans la grille.

3. Grille selon la revendication 2, caractérisée en ce que l'angle de croisement est de 90°.

4. Grille selon la revendication 2 ou la revendication 3 caractérisée en ce que les parois de chaque cellule pyramidale, ainsi constituée, sont complétées entre les tubes (1d, 3d ; 2d, 4d) parallèles de deux nappes (1, 3 ; 2, 4) différentes par des plaques (8) de liaison soudées aux tubes entre leurs génératrices les plus voisines.

5. Grille selon l'une quelconque des revendications 2 à 4, caractérisée en ce que les tubes adjacents de deux paires consécutives de la nappe supérieure (7) sont confondus tandis que les tubes correspondants de la nappe (6) immédiatement inférieure sont réunis par des plaques (9) de liaison horizontales.

6. Grille selon l'une quelconque des revendications 2 à 4, caractérisée en ce que chaque ensemble de tubes parallèles est raccordé à chacune de ses extrémités à un conduit (11, 12, 13, 14) disposé à la périphérie supérieure de la grille.

7. Grille selon la revendication 6, caractérisée en ce que la circulation du fluide dans les tubulures est réalisée depuis un conduit (11) répartiteur connecté à l'extrémité amont d'un ensemble (2, 4, 6) de tubes parallèles jusqu'à un collecteur (14) connecté à l'extrémité aval d'un autre ensemble (1, 3, 5) de tubes parallèles, lesdits ensembles de tubes étant parcourus successivement par le fluide circulant du répartiteur (11) au collecteur (14).

8. Grille selon la revendication 1, caractérisée en ce qu'elle est constituée par une juxtaposition de cellules évasées (17) dont la paroi comporte au moins une tubulure (18) enroulée hélicoïdalement.

9. Grille selon la revendication 8, caractérisée en ce que chaque cellule (17, 18) est réunie à ses voisines par des plaques (22) soudées sensiblement dans le plan de leur plus grande section.

10. Grille selon la revendication 8 ou la revendication 9, caractérisée en ce qu'elle comprend sur sa surface supérieure un réseau de collecteurs (20) parallèles auquel est connectée chacune des extrémités aval des tubulures (18), ces collecteurs (20) étant eux-mêmes reliés par leur deux extrémités à des tubes (39) échangeurs de chaleur s'étendant verticalement le long des parois d'une enceinte de confinement du lit fluidisé.

11. Grille selon la revendication 8 ou la revendication 9, caractérisée en ce que chaque tubulure (18) a son extrémité aval raccordée à un tube vertical (23, 34) d'échange de chaleur.

12. Grille selon l'une quelconque des revendications précédentes, caractérisée en ce qu'elle forme la paroi supérieure d'un caisson (21) d'alimentation en gaz additionnel de fluidisation dont les orifices de sortie (15, 22a) sont ménagés entre les ouvertures divergentes (17).

## Patentansprüche

1. Gitter zum Fluidisieren einer Pulvermaterialmasse, für einen exothermen Reaktor mit einem Fließbett, umfassend die Dicke einer Wand durchsetzende benachbarte Einlaßöffnungen (17) für ein Auftriebsgas für das auf deren Oberseite befindliche Material, wobei die Öffnungen in Richtung der zu fluidisierenden Masse disvergierend ausgebildet sind, dadurch **gekennzeichnet**, daß die divergierenden Wände der jeweiligen Öffnungen Rohrstutzen (1 bis 7, 18) für den Umlauf eines Kühlfluides aufweisen.

2. Gitter nach Anspruch 1, dadurch **gekennzeichnet**, daß es durch Überlagerung von Bündeln (1 bis 7) paralleler Rohrpaare gebildet ist, wobei jedes Bündel ein benachbartes Bündel kreuzt und wobei der Abstand der Rohre eines jeden Paares im Bündel mit der Höhe des Bündels im Gitter zunimmt.

3. Gitter nach Anspruch 2, dadurch **gekennzeichnet**, daß der Kreuzungswinkel gleich 90° ist.

4. Gitter nach Anspruch 2 oder Anspruch 3, dadurch **gekennzeichnet**, daß die Wände jeder so gebildeten pyramidenförmigen Zelle zwischen den parallelen Rohren (1d, 3d, 2d, 4d) zweier unterschiedlicher Bündel (1, 3 ; 2, 4) durch Verbindungsplatten (8) ergänzt sind, die mit den Rohren an ihren einander nächstliegenden Mantellinien verschweißt sind.

5. Gitter nach einem der Ansprüche 2 bis 4, dadurch **gekennzeichnet**, daß die benachbarten Rohre zweier aufeinanderfolgender Paare des oberen Bündels (7) zu einem zusammengefaßt sind, während die entsprechenden Rohre des unmittelbar darunterliegenden Bündels (6) durch horizontale Verbindungsplatten (9) miteinander verbunden sind.

6. Gitter nach einem der Ansprüche 2 bis 4, dadurch **gekennzeichnet**, daß jede Gruppe paralleler Rohre jeweils an jedem Ende an eine Leitung (11, 12, 13, 14) angeschlossen ist, die an der oberen Peripherie des Gitters angeordnet ist.

7. Gitter nach Anspruch 6, dadurch **gekennzeichnet**, daß der Umlauf des Fluides in den Rohrstutzen sich von einem Verteilerrohr (11), welches mit dem stromaufwärtigen Ende einer Gruppe (2, 4, 6) paralleler Rohre verbunden ist, zu einem Sammler (14), welcher mit dem stromabwärtigen Ende einer anderen Gruppe (1, 3, 5) paralleler Rohre verbunden ist, erstreckt, so daß die Rohrgruppen nacheinander von dem umlaufenden Fluid vom Verteiler (11) zum Sammler (14) durchströmt werden.

8. Giter nach Anspruch 1, dadurch **gekennzeichnet**, daß es durch Aneinanderfügen von sich erweiternden Zellen (17) gebildet ist, deren Wand jeweils wenigstens einen schraubenlinienförmig gewickelten Rohrstutzen (18) aufweist.

9. Gitter nach Anspruch 8, dadurch **gekennzeichnet**, daß jede Zelle (17, 18) mit den benachbarten Zellen über Platten (22) miteinander verbunden ist, die im wesentlichen in der Ebene des größten Querschnittes angeschweißt sind.

10. Gitter nach Anspruch 8 oder 9, dadurch **gekennzeichnet**, daß es an seiner Oberseite ein Gitter von parallelen Sammlern (20) hat, an die die jeweiligen stromabwärtigen Enden der Rohrstutzen (18) angeschlossen sind, wobei die Sammler (20) selbst über ihre beiden Enden an Wärmetauscherrohre (39) angeschlossen sind, welche sich vertikal entlang von Wänden einer Begrenzungseinfassung des Fließbettes erstrecken.

11. Gitter nach Anspruch 8 oder 9, dadurch **gekennzeichnet**, daß jeder Rohrstutzen (18) mit seinem stromabwärtigen Ende an ein vertikales Wärmetauscherrohr (23, 34) angeschlossen ist.

12. Gitter nach einem der vorstehenden Ansprüche, dadurch **gekennzeichnet**, daß es die obere Wand eines Behälters zur Lieferung von zusätzlichem Fluidisierungsgas bildet, dessen Ausgangsöffnungen (15, 22a) zwischen den divergierenden Öffnungen (17) angeordnet sind.

## Claims

1. A grid for fluidizing a mass of finely divided material in a fluidized bed exothermal reactor, the grid comprising adjacent openings for admitting a gas for sustaining said material which is situated over the top face of a wall having said openings passing through the thickness thereof, said openings diverging in the direction of the mass to be fluidized, the grid being characterized in that the diverging walls of each opening include pipes (1-7, 18) for conveying the flow of a cooling fluid.

2. A grid according to claim 1, characterized in that it is constituted by superposing layers of parallel pairs of tubes, with the tubes in each layer crossing the tubes in the adjacent layer and with the spacing between the pairs of tubes in each layer increasing with increasing height of the layer within the grid.

3. A grid according to claim 2, characterized in that the crossing angle is 90°.

4. A grid according to claim 2 or claim 3, characterized in that the walls of each pyramid-shaped cell constituted in this way are materialized between the parallel tubes (1d, 3d ; 2d, 4d) of two different layers (1, 3 ; 2, 4) by connection plates (8) which are welded to the tubes interconnecting them via their closest generator lines.

5. A grid according to any one of claims 2 to 4, characterized in that the adjacent tubes of two consecutive pairs in the top layer (7) coincide, whereas the corresponding tubes of the layer (6) immediately below are interconnected by horizontal connection plates (9).

6. A grid according to any one of claims 2 to 4, characterized in that each set of parallel tubes is connected at each of its ends to a duct (11, 12, 13, 14) disposed at the top periphery of the grid.

7. A grid according to claim 6, characterized in that the fluid is caused to flow in the pipes from a distribution manifold duct (11) connected to the upstream ends of a set of parallel tubes (2, 4, 6) all the way to a collecting manifold (14) connected to the downstream end of the other set (1, 3, 5) of parallel tubes, with the fluid flowing from the distribution manifold (11) to the collecting manifold (14) via both sets of tubes in succession.

8. A grid according to claim 1, characterized in that it is constituted by juxtaposing flared cells (17) each of whose walls includes at least one helically wound pipe (18).

9. A grid according to claim 8, characterized in that each cell (17, 18) is connected to its neighbors by plates (22) which are welded substantially in the plane of the largest sections of the cells.

10. A grid according to claim 8 or 9, characterized in that its top surface includes a network of parallel collecting manifolds (20) having the downstream end of each of the pipes (18) connected thereto, said manifolds (20) themselves being connected at both ends to heat exchange tubes (39) extending vertically along the walls of an enclosure for confining the fluidized bed.

11. A grid according to claim 8 or 9, characterized in that each pipe (18) has its downstream end connected to a vertical heat exchange tube (23, 34).

12. A grid according to any preceding claim, characterized in that it forms the top wall of a feed box (21) for feeding additional fluidizing gas, with the outlet orifices (15, 22) from the feed box being provided between the diverging openings (17).

# Fig.1

## Fig. 2

## Fig. 3

Fig. 6

Fig. 7

Fig. 4

Fig. 5

*Fig. 8*

*Fig. 9*